# EUROPEAN PATENT APPLICATION

(11) **EP 4 571 797 A1**
(43) Date of publication of application: **18.06.2025**
(21) Application number: 23884180.3
(22) Date of filing: 12.06.2023
(51) Int. Cl.: H01F 1/057, H01F 41/02

(54) **R-T-B-BASED PERMANENT MAGNET, AND PREPARATION METHOD THEREFOR AND USE THEREOF**

(30) Priority: 31.10.2022 CN 202211352445
(71) Applicant: FUJIAN GOLDEN DRAGON RARE-EARTH Co., Ltd., Fujian 366300 (CN)
(72) Inventor: LAN, Qin, Longyan, Fujian 366300 (CN); OUYANG, Fuzhong, Longyan, Fujian 366300 (CN); HUANG, Jiaying, Longyan, Fujian 366300 (CN)
(74) Representative: Stöckeler, Ferdinand
(86) International application number: PCT/CN2023/099744
(87) International publication number: WO 2024/093241

(57) **Abstract**

The invention discloses an R-T-B-based permanent magnet, and preparation method therefor and use thereof. The R-T-B-based permanent magnet comprises a nitrogen content of X ppm which satisfies 500≤X≤1300, the R-T-B-based permanent magnet has an average grain size of D µm which satisfies -2.6lnX+20≤D≤-2.3lnX+19.6; the R-T-B-based permanent magnet comprises a main phase grain and a grain boundary phase; the main phase grain comprise R₂Fe₁₄B; the grain boundary phases is distributed between main phase grains; and the grain boundary phase comprises a R-N enriched area having a volume fraction of less than 10% in the grain boundary phase. In the R-T-B-based permanent magnet of the present invention, nitrogen elements are uniformly distributed at the grain boundaries, and no NdN agglomerates are formed or the content thereof is extremely low, thereby increasing the coercive force Hcj of the magnet, reducing the magnetic loss at high-temperature, and improving the corrosion resistance.

## Description

### FIELD OF THE INVENTION

The invention relates to an R-T-B-based permanent magnet, and the preparation method and use thereof.

### BACKGROUND OF THE INVENTION

In the prior art, nitrogen in R-T-B based rare earth permanent magnet materials is an unavoidable impurity, which mainly comes from the following three aspects: raw material impurities, organic additives that must be added in the process, and nitrogen atmosphere from respective processes. According to the ability to control the nitrogen content, the possible range of nitrogen content in R-T-B based rare earth permanent magnet materials is 0.01%-0.15%, and the actual measured level of most products in this field is 0.02%-0.05%. Excessive nitrogen content can easily lead to the formation of NdN agglomerates. On the one hand, this will consume the amount of rare earth, causing the coercive force Hcj to decrease, and on the other hand, it will increase the impurity phase, resulting in a decrease in the volume fraction of the main phase, thereby reducing the remanence Br, and the R activity is high, resulting in a decrease in the corrosion resistance of high-concentration agglomerated materials. In order to improve performance, the impurity nitrogen should be controlled as low as possible. The prior art CN103875047A reduces the nitrogen content of the magnet by changing the ambient atmosphere during the manufacturing process and using inert gases such as He and Ar instead of N₂ atmosphere. However, this method has high manufacturing cost and is not suitable for large-scale mass production.

### SUMMARY OF THE INVENTION

The technical problem to be solved by the present invention is to provide an R-T-B based permanent magnet, the preparation method and use thereof for overcoming the defect of the R-T-B based permanent magnets in the prior art that NdN agglomerates are formed at the grain boundaries due to excessive nitrogen content, resulting in a decrease in the Hcj of the magnets. The R-T-B based permanent magnet of the present invention can allow a higher nitrogen content without deliberately reducing the nitrogen content, thereby overcoming the prejudice of the prior art. The nitrogen elements in the R-T-B based permanent magnet of the present invention are evenly distributed at the grain boundaries, and no NdN agglomerates are formed or the content thereof is extremely low, thereby increasing the coercive force Hcj of the magnet, reducing high-temperature magnetic loss, and improving corrosion resistance.

The present invention solves the above-mentioned technical problems through the following technical solutions.

The invention provides an R-T-B-based permanent magnet, wherein:
the R-T-B-based permanent magnet comprises a nitrogen content of X ppm which satisfies 500≤X≤1300,
the R-T-B-based permanent magnet has an average grain size of D µm which satisfies -2.6lnX+20≤D≤-2.3lnX+19.6;
the R-T-B-based permanent magnet comprises a main phase grain and a grain boundary phase; the main phase grain comprise R₂Fe₁₄B; the grain boundary phases is distributed between main phase grains; and the grain boundary phase comprises a R-N enriched area having a volume fraction of less than 10% in the grain boundary phase.

In the present invention, the volume fraction of the R-N enriched area in the grain boundary phase can be obtained by detecting with a FE-EPMA device and calculating with conventional image processing software (e.g., Image J) in the art.

In the present invention, the X preferably satisfies 550≤X≤1200, and more preferably satisfies 600≤X≤1000.

In the present invention, the D preferably satisfies 1.6≤D≤5.0, and more preferably satisfies 2.1≤D≤4.8.

In a preferable embodiment of the present invention, the X is 557 and the D is 4.1.

In a preferable embodiment of the present invention, the X is 685 and the D is 3.5.

In a preferable embodiment of the present invention, the X is 812 and the D is 3.2.

In a preferable embodiment of the present invention, the X is 956 and the D is 3.3.

In a preferable embodiment of the present invention, the X is 1105 and the D is 3.

In the invention, the R-N enriched area has a volume fraction of preferably less than 5%, more preferably less than 3%, for example 1% or 2% in the grain boundary phase.

The invention further provides a preparation method for the R-T-B-based permanent magnet, comprising following steps of:
S1: smelting a raw material composition for the R-T-B-based permanent magnet to obtain a molten liquid;
S2: casting the molten liquid to obtain an alloy sheet;
S3: subjecting the alloy sheet to hydrogen decrepitation to obtain a coarse powder;
S4: subjecting the coarse powder to jet-milling pulverization to obtain a fine powder;
S5: shaping the fine powder to obtain a molded body;
S6: sintering the molded body to obtain a sintered body;
S7: heat-treating the sintered body to obtain the R-T-B-based permanent magnet.

In the invention, preferably, the raw material composition for the R-T-B-based permanent magnet comprises the following components of:
a light rare earth element RL, wherein the RL comprises Nd: 24-30wt%, Pr: 0wt%≤Pr≤8wt%;
a heavy rare earth element RH, wherein the RH comprises Dy and/or Tb: 0wt%≤RH≤0.9wt%;
Co: 0-1.5wt%;
Al: 0.03-0.3wt%;
X: 0-0.6wt%, wherein X is one or more of Zr and Ti;
Cu: 0.1-0.4wt%;
Ga: 0.1-0.4wt%;
B: 0.92-0.98wt%; and
a balance of Fe;
wherein wt% represents a mass percentage of a corresponding component in the R-T-B-based permanent magnet, and a sum of all components is 100wt%.

In step S1, the smelting can be carried out according to conventional methods in the art, for example, smelting in a high-frequency vacuum induction smelting furnace.

Wherein, the vacuum degree of the high-frequency vacuum induction smelting furnace can be 5×10⁻²Pa.

Wherein, the smelting temperature may be 1500°C or less, for example, 1480°C.

Wherein, the smelting is generally carried out in a crucible made of alumina. The alumina crucible will introduce a portion of Al into the R-T-B-based permanent magnet.

In step S2, the casting process may be a conventional casting process in the art, for example, including: casting in a medium-frequency vacuum induction rapid solidification strip casting furnace at an Ar atmosphere, and rapid cooling to obtain an alloy sheet.

Wherein, the pressure of the Ar atmosphere is preferably 5.5×10⁴Pa.

Wherein, the cooling rate of the rapid cooling is preferably 10²°C/sec-10⁴°C/sec.

In step S3, the hydrogen decrepitation is carried out in a furnace for hydrogen decrepitation. The hydrogen decrepitation process can be a conventional hydrogen decrepitation process in the art, for example, including hydrogen absorption, dehydrogenation, and cooling.

Wherein, the hydrogen absorption can be carried out under a condition of hydrogen pressure of 0.05-0.25MPa, for example, 0.15MPa.

Wherein, the dehydrogenation can be carried out under the condition of vacuuming whiling heating.

Wherein, the cooling can be carried out in a nitrogen atmosphere or an argon atmosphere.

When the cooling is carried out under a nitrogen atmosphere, the nitrogen atmosphere can be achieved by introducing nitrogen. Wherein, the nitrogen is introduced for preferably 1-5 times, and the introduced nitrogen has a pressure of preferably 0.08MPa.

In step S4, the jet-milling pulverization is performed in a jet mill.

The jet-milling pulverization can be carried out in a nitrogen atmosphere with an oxidizing gas content of 150 ppm or less. The oxidizing gas refers to oxygen and/or moisture.

The rotation speed for the jet-milling pulverization is preferably 3500-6000rpm.

The jet mill pulverization is carried out under a nozzle pressure of 0.35-0.45MPa, for example, 0.38MPa.

The fine powder obtained after the jet-milling pulverization has a particle size D50 of 2.5-5.0 µm.

Preferably, the method further includes a step of uniformly mixing the fine powder with a lubricant after the jet-milling pulverization, or the method further includes a step of uniformly mixing the coarse powder with a lubricant before the jet-milling pulverization. Wherein, the lubricant is, for example, zinc stearate and benzotriazole; the lubricant can be added at an amount of 0.10-0.15%, for example 0.12% by weight of the mixed powder. Wherein, the mixing is preferably carried out by a V-type mixer.

In step S5, the shaping process can be a conventional shaping process in the art, such as a magnetic field orientation shaping method. Preferably, the magnetic field orientation shaping method comprises steps of: subjecting the powder to primary shaping in an oriented magnetic field of 1.6 T at a shaping pressure of 0.35 ton/cm² by using a right-angle oriented magnetic field molding machine, and then demagnetizing it in a magnetic field of 0.2 T to obtain a primary shaped body; sealing the primary shaped body and then subjecting it to a secondary shaping at a pressure of 1.3 ton/cm² by using an isostatic pressing machine.

In step S6, the sintering is carried out in a sintering furnace. The sintering process may be a conventional sintering process in the art, for example, including: preheating, sintering, and cooling under vacuum conditions.

Wherein, the vacuum condition is, for example, 5×10⁻³Pa.

Wherein, the temperature for the preheating may be 300-600°C. The time for the preheating may be 1-2h. Preferably, the preheating is performed at a temperature of 300°C and 600°C for 1h respectively.

Wherein, the sintering temperature may be a conventional sintering temperature in the art, such as 1040-1090°C.

Wherein, the sintering time may be a conventional sintering time in the art, such as 4 hours.

Wherein, the cooling may be performed in a nitrogen atmosphere or an argon atmosphere.

When the cooling is carried out in a nitrogen atmosphere, the nitrogen atmosphere is achieved by introducing nitrogen. Wherein nitrogen is introduced for preferably 1-5 times, and the introduced nitrogen has a pressure of preferably 0.05-0.1MPa, for example 0.1MPa.

In step S7, the heat treating is preferably performed at a temperature of 430-600°C, for example, 500°C.

Preferably, the heat treating is performed under a vacuum of 9×10⁻³ Pa.

The heat treatment time may be 3 hours.

The heat treating further comprises a cooling step, and the cooling can be performed under a nitrogen atmosphere or an argon atmosphere.

In some preferable embodiments, at most one cooling step of the cooling in step S3, the cooling in step S6 and the cooling in step S7 is performed under a nitrogen atmosphere.

In a preferable embodiment of the present invention, the cooling in step S3 is carried out under an argon atmosphere, the cooling in step S6 is carried out under an argon atmosphere, and the cooling in step S7 is carried out under an argon atmosphere.

In a preferable embodiment of the present invention, the cooling in step S3 is carried out in a nitrogen atmosphere, the cooling in step S6 is carried out in an argon atmosphere, and the cooling in step S7 is carried out in an argon atmosphere.

In a preferable embodiment of the present invention, the cooling in step S3 is carried out in an argon atmosphere, the cooling in step S6 is carried out in a nitrogen atmosphere, and the cooling in step S7 is carried out in an argon atmosphere.

In a preferable embodiment of the present invention, the cooling in step S3 is carried out under an argon atmosphere, the cooling in step S6 is carried out under an argon atmosphere, and the cooling in step S7 is carried out under a nitrogen atmosphere.

In a more preferable embodiment of the present invention, the cooling in step S3 is carried out under an argon atmosphere, the cooling in step S6 is carried out under an argon atmosphere, and the cooling in step S7 is carried out under an argon atmosphere, wherein the jet-milling pulverization in step S4 is performed at a speed of 4500-5500rpm, and the jet mill pulverization in step S4 is carried out under a nozzle pressure of 0.35-0.45Mpa.

In a more preferable embodiment of the present invention, the cooling in step S3 is carried out in a nitrogen atmosphere, the cooling in step S6 is carried out in an argon atmosphere, and the cooling in step S7 is carried out in an argon atmosphere, wherein the jet-milling pulverization in step S4 is performed at a speed of 5000-6000rpm, and the jet mill pulverization in step S4 is carried out under a nozzle pressure of 0.35-0.45Mpa.

In a more preferable embodiment of the present invention, the cooling in step S3 is carried out in an argon atmosphere, the cooling in step S6 is carried out in a nitrogen atmosphere, and the cooling in step S7 is carried out in an argon atmosphere, wherein the jet-milling pulverization in step S4 is performed at a speed of 5000-6000rpm, and the jet mill pulverization in step S4 is carried out under a nozzle pressure of 0.35-0.45Mpa.

In a more preferable embodiment of the present invention, the cooling in step S3 is carried out under an argon atmosphere, the cooling in step S6 is carried out under an argon atmosphere, and the cooling in step S7 is carried out under a nitrogen atmosphere, wherein the jet-milling pulverization in step S4 is performed at a speed of 5500-6000rpm, and the jet mill pulverization in step S4 is carried out under a nozzle pressure of 0.35-0.45Mpa.

In a further preferable embodiment of the present invention, the cooling in step S3 is carried out under an argon atmosphere, the cooling in step S6 is carried out under an argon atmosphere, and the cooling in step S7 is carried out under an argon atmosphere, wherein the jet-milling pulverization in step S4 is performed at a speed of 4500-5500rpm, the jet mill pulverization in step S4 is carried out under a nozzle pressure of 0.35-0.45Mpa, and in step S4, the lubricant is added at an amount of 0.25-0.35% by weight of the mixed powder.

In a further preferable embodiment of the present invention, the cooling in step S3 is carried out in a nitrogen atmosphere, the cooling in step S6 is carried out in an argon atmosphere, and the cooling in step S7 is carried out in an argon atmosphere, wherein the jet-milling pulverization in step S4 is performed at a speed of 5000-6000rpm, the jet mill pulverization in step S4 is carried out under a nozzle pressure of 0.35-0.45Mpa, and in step S4, the lubricant is added at an amount of 0.10-0.20% by weight of the mixed powder.

In a further preferable embodiment of the present invention, the cooling in step S3 is carried out in an argon atmosphere, the cooling in step S6 is carried out in a nitrogen atmosphere, and the cooling in step S7 is carried out in an argon atmosphere, wherein the jet-milling pulverization in step S4 is performed at a speed of 5000-6000rpm, the jet mill pulverization in step S4 is carried out under a nozzle pressure of 0.35-0.45Mpa, and in step S4, the lubricant is added at an amount of 0.10-0.20% by weight of the mixed powder.

In a further preferable embodiment of the present invention, the cooling in step S3 is carried out under an argon atmosphere, the cooling in step S6 is carried out under an argon atmosphere, and the cooling in step S7 is carried out under a nitrogen atmosphere, wherein the jet-milling pulverization in step S4 is performed at a speed of 5500-6000rpm, the jet mill pulverization in step S4 is carried out under a nozzle pressure of 0.35-0.45Mpa, and in step S4, the lubricant is added at an amount of 0.10-0.20% by weight of the mixed powder.

In a specific embodiment of the present invention, the cooling in step S3 is carried out under an argon atmosphere, the cooling in step S6 is carried out under an argon atmosphere, and the cooling in step S7 is carried out under an argon atmosphere, wherein the jet-milling pulverization in step S4 is performed at a speed of 5000rpm, the jet mill pulverization in step S4 is carried out under a nozzle pressure of 0.38Mpa, and in step S4, the lubricant is added at an amount of 0.30% by weight of the mixed powder.

In a specific embodiment of the present invention, the cooling in step S3 is carried out in a nitrogen atmosphere, the cooling in step S6 is carried out in an argon atmosphere, and the cooling in step S7 is carried out in an argon atmosphere, wherein the jet-milling pulverization in step S4 is performed at a speed of 5500rpm, the jet mill pulverization in step S4 is carried out under a nozzle pressure of 0.38Mpa, and in step S4, the lubricant is added at an amount of 0.12% by weight of the mixed powder.

In a specific embodiment of the present invention, the cooling in step S3 is carried out in an argon atmosphere, the cooling in step S6 is carried out in an argon atmosphere, and the cooling in step S7 is carried out in an argon atmosphere, wherein the jet-milling pulverization in step S4 is performed at a speed of 4800rpm, the jet mill pulverization in step S4 is carried out under a nozzle pressure of 0.48Mpa, and in step S4, the lubricant is added at an amount of 0.30% by weight of the mixed powder.

In a specific embodiment of the present invention, the cooling in step S3 is carried out in an argon atmosphere, the cooling in step S6 is carried out in a nitrogen atmosphere, and the cooling in step S7 is carried out in an argon atmosphere, wherein the jet-milling pulverization in step S4 is performed at a speed of 5500rpm, the jet mill pulverization in step S4 is carried out under a nozzle pressure of 0.38Mpa, and in step S4, the lubricant is added at an amount of 0.12% by weight of the mixed powder.

In the invention, preferably, the method further comprises a step of grain boundary diffusion after step S6 and before step S7.

In the present invention, the grain boundary diffusion treatment can be carried out according to conventional processes in the art. For example, the surface of the sintered body obtained after the sintering is evaporated, coated or sputtered with a diffusion source raw material, and then subjected to a diffusion heat treatment.

Wherein, the diffusion source raw material is preferably a substance comprising a heavy rare earth element, wherein the substance comprising a heavy rare earth element can be a heavy rare earth element metal, or a compound or alloy comprising a heavy rare earth element. The heavy rare earth element preferably comprises Tb and/or Dy;

Wherein, the heat treatment for diffusion is performed at a temperature of preferably 800-950°C, such as 920°C.

Wherein, the heat treatment for diffusion is performed for a time of preferably 12-48h, such as 24h.

The invention further provides use of the above R-T-B-based permanent magnet as an electronic component in an electric motor.

On the basis of conforming to the common sense in the art, the above-mentioned preferred conditions can be arbitrarily combined to obtain the preferred embodiments of the present invention.

The reagents and raw materials used in the present invention are commercially available.

The positive effects of the present invention are as follows:
In the present invention, by controlling the relationship between the average grain size and nitrogen content in the R-T-B-based permanent magnet, the uniform distribution of nitrogen is ensured, and the formation of R-N enriched areas is avoided or minimized. The volume fraction of the R-N-rich zone in the grain boundary phase is less than 10%, or even less than 2%, thereby increasing the coercive force Hcj (Hcj ≥ 22.6 kOe, or even as high as 28.5 kOe), reducing the magnetic loss at high-temperature (the thermal demagnetization at 120 °C does not exceed 0.5%, and thermal demagnetization at 150 °C does not exceed 1.0%), and improving the corrosion resistance (in the HAST test, the weight change ΔM before and after the test does not exceed 0.57 mg/cm²).

### BRIEF DESCRIPTION OF THE DRAWINGS

Fig. 1 shows a Nd and N distribution diagram of the R-T-B-based permanent magnet obtained in Example 3 formed by FE-EPMA surface scanning.
Fig. 2 shows a Nd and N distribution diagram of the R-T-B-based permanent magnet obtained in Comparative Example 3 formed by FE-EPMA surface scanning, where point 1 is a R-N enriched area.

### DETAILED DESCRIPTION OF THE INVENTION

The present invention is further described below by way of examples, but the present invention is not limited to the scope of the examples described.

The experimental methods in the following examples without specifying specific conditions were carried out according to conventional methods and conditions, or selected according to the product instructions.

**The preparation method of the** R-T-B-based **permanent magnets is as follows:**

### Examples 1, 2, 4, 5 and Comparative Examples 1, 2 and 4

S1. Smelting process: According to the formulas in Table 1, a prepared raw material composition was placed in an alumina crucible, and vacuum smelted in a high-frequency vacuum smelting furnace at a vacuum of 5×10⁻²Pa and 1480°C.

S2. Ar was introduced into a medium-frequency vacuum induction rapid solidification strip casting furnace wich a pressure for the Ar atmosphere of 5.5 × 10⁴ Pa to perform casting and rapidly cooling (the speed was 10²°C/sec - 10⁴°C/sec) to obtain an alloy sheet.

S3. Hydrogen decrepitation process: The furnace for hydrogen decrepitation comprising the alloy sheet was vacuumed at room temperature, and hydrogen with a purity of 99.9% was introduced into the furnace for hydrogen decrepitation and the hydrogen pressure was maintained at 0.15 MPa, and after full hydrogen decrepitation, vacuuming whiling heating was performed for full dehydrogenation, and then argon or nitrogen was introduced for cooling, and then the coarse powder after hydrogen decrepitation was took out of the furnace for hydrogen decrepitation.

S4. Jet-milling pulverization process: In a nitrogen atmosphere with an oxidizing gas (oxygen or moisture) content of 150 ppm or less, the coarse powder after hydrogen decrepitation pulverization was jet-milling pulverized for 3 hours under a certain rotational speed of the air classifier wheel of the jet mill and at a certain nozzle pressure for jet-milling pulverization to obtain a fine powder with a D50 of 2.5-5.0 µm, and a certain amount of a lubricant zinc stearate and benzotriazole was added to the fine powder, and then fully mixed with a V-type mixer.

S5. Magnetic field shaping process: By using a right-angle oriented magnetic field molding machine in an oriented magnetic field of 1.6 T at a shaping pressure of 0.35 ton/cm², the above mixed powder was primarily shaped and then demagnetized in a magnetic field of 0.2 T; in order to prevent the primary shaped body from contacting the air, it was sealed; and the primary shaped body was secondarily shaped at a pressure of 1.3 ton/cm² by using an isostatic pressing machine.

S6. Sintering process: Each molded body was moved to a sintering furnace for sintering. After sintering at 300°C and 600°C for 1 h respectively under a vacuum of 5×10⁻³ Pa, the molded body was sintered at 1040°C for 2 h, and then argon or nitrogen was introduced to make the pressure reach 0.1 MPa, and then cooled to room temperature.

S7. Heat treatment process: The sintered body was subjected to tempering treatment at a heat treatment temperature of 500°C for 3 h under a vacuum of 9×10⁻³ Pa, and then argon or nitrogen was introduced to cool it to room temperature and then the sintered body was taken out to obtain an R-T-B-based permanent magnet.

### Example 3 and Comparative Example 3

The following grain boundary diffusion step was further included between steps S6 and S7:
Each group of sintered bodies was processed into a magnet with a length × width of 50 × 39 mm and a thickness of 4.5 mm, wherein the thickness direction was the magnetic field orientation direction. After the surface was cleaned, a raw material prepared with Tb fluoride was fully coated on the magnet. The coated magnet was dried, and then subjected to diffusion heat treatment at 920°C for 24 h in a high-purity argon atmosphere, and then cooled to room temperature.

The formulas of the raw materials and the preparation process parameters (the amount of the lubricant added, the gas used for dehydrogenation, the rotational speed of the air classifier wheel of the jet mill, the nozzle pressure for jet-milling pulverization, the gas used in cooling in the sintering process, and the gas used in cooling in the heat treatment process) for the R-T-B based permanent magnets in Examples 1-5 and Comparative Examples 1-4 are shown in Tables 1 and 2.

**Table 1 Components and contents of the raw material compositions of the R-T-B-based permanent magnets (wt%)**

| No. | TRE | Nd | Pr | Dy | Al | Cu | Ga | Co | Ti | Zr | B | Fe |
|---|---|---|---|---|---|---|---|---|---|---|---|---|
| A | 32.2 | 24 | 8 | 0.2 | 0.3 | 0.4 | 0.4 | 1.5 | 0.2 | / | 0.92 | bal. |
| B | 31.0 | 27.9 | 3.1 | / | 0.2 | 0.3 | 0.3 | 0.5 | / | 0.4 | 0.96 | bal. |
| C | 30.0 | 30 | / | / | 0.03 | 0.1 | 0.1 | / | 0.12 | / | 0.98 | bal. |

**Table 2 Formulations and process parameters in Examples 1-5 and Comparative Examples 1-4**

| | Components of the Composition | Content of Lubricant | Gas used in Dehydrogenation | Rotational Speed of the Air Classifier Wheel of the Jet Mill /rpm | Nozzle Pressure for Jet-milling Pulverization /Mpa | Type of Gas used in Cooling in Sintering Process | Type of gas used in cooling in heat treatment process | Whether to include Grain Boundary Diffusionn |
|---|---|---|---|---|---|---|---|---|
| Example 1 | A | 0.30% | Argon | 5000 | 0.38 | Argon | Argon | No |
| Example 2 | B | 0.12% | Nitrogen | 5500 | 0.38 | Argon | Argon | No |
| Example 3 | C | 0.30% | Argon | 4800 | 0.48 | Argon | Argon | Yes |
| Example 4 | A | 0.12% | Argon | 5500 | 0.38 | Nitrogen | Argon | No |
| Example 5 | A | 0.12% | Argon | 6000 | 0.38 | Argon | Nitrogen | No |
| Comparative Example 1 | A | 0.12% | Argon | 3600 | 0.38 | Argon | Argon | No |
| Comparative Example 2 | B | 0.30% | Argon | 3600 | 0.38 | Argon | Argon | No |
| Comparative Example 3 | C | 0.12% | Nitrogen | 4200 | 0.38 | Argon | Argon | Yes |
| Comparative Example 4 | A | 0.12% | Argon | 4000 | 0.38 | Nitrogen | Argon | No |

### Effect Example 1

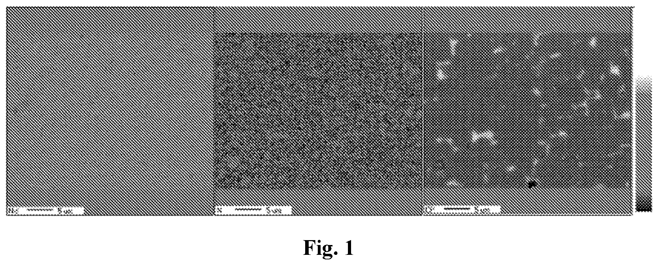

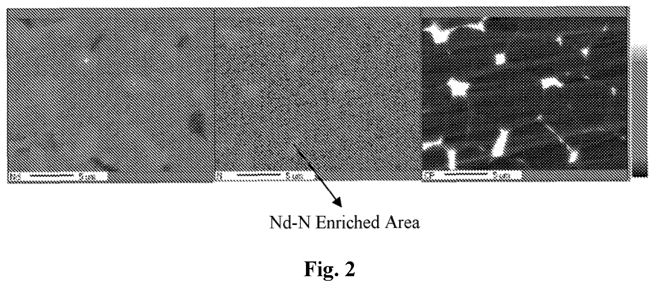

The R-T-B based permanent magnets obtained in Example 3 and Comparative Example 3 were characterized by a FE-EPMA equipment, and the results are shown in Figs. 1 and 2, respectively.

Different colors represent the difference in concentration of respective elements. As shown on the right scale, the darker the color, the lower the concentration; the lighter the color, the higher the concentration.

As shown in Fig. 1, in the R-T-B based permanent magnet prepared in Example 3, in the grain boundary phase, the distribution of Nd and N is relatively uniform, and Nd-N is less enriched. As can be seen from Fig. 2, in the R-T-B based permanent magnet prepared in Comparative Example 3, in the grain boundary phase, Nd and N are aggregated in the same area to form a large number of Nd-N enriched areas.

### Effect Example 2

(1) Testing for N content: A surface of the R-T-B based permanent magnets obtained in Examples 1-5 and Comparative Examples 1-4 was ground to remove the oxide layer, and then the nitrogen content thereof was tested using an oxygen and nitrogen analyzer (Horiba, EMGA-620W).
(2) Testing for average grain size D: A vertical orientation surface of each of the R-T-B based permanent magnets obtained in Examples 1-5 and Comparative Examples 1-4 was ground and polished, and after being corroded with a 5% nitric acid solution, a picture with a magnification of 1000 times was taken using a metallographic microscope. Three straight lines of length L were drawn at the top, middle and bottom of the picture, and the number n of grains on each line segment was measured. Grain size = L/n. The average grain size is the average value on the three lines.
(3) Volume fraction of the R-N enriched region in the grain boundary phase: A vertical orientation surface of each of the R-T-B permanent magnets prepared in Examples 1-5 and Comparative Examples 1-4 was polished, and the surface was scanned using a field emission electron probe microanalyzer FE-EPMA (JEOL, 8530F), and then the proportion statistics were performed using a commonly used image processing software (such as Image J).
(4) Testing for magnetic properties: The magnetic properties (remanence Br, coercive force Hcj) of the R-T-B based permanent magnets obtained in Examples 1-5 and Comparative Examples 1-4 were tested by using the NIM-2000 permanent magnet material precision measurement system from the China National Institute of Metrology. The test temperature was 20°C.
(5) Testing for thermal demagnetization: The R-T-B based permanent magnets obtained in Examples 1-5 and Comparative Examples 1-4 were processed into a size of 50 mm × 39 mm × 4.5 mm. The direction of 4.5mm was the orientation direction. Under a semi-open circuit condition of a 2mm thick iron plate, the permanent magnet was heated to 120°C or 150°C, and kept in an oven for 2h before cooling to room temperature. The magnetic flux before and after heating was tested by a fluxmeter. Thermal demagnetization = (magnetic flux before heating - magnetic flux after heating) / magnetic flux before heating × 100%.
(6) Testing for corrosion resistance: The R-T-B based permanent magnets prepared in the Examples and the Comparative examples were processed into a size of 50mm×39mm×4.5mm. The 4.5mm direction was the orientation direction. The permanent magnets were maintained for 240 hours in a high-voltage accelerated aging tester having a humidity of 95% at a temperature of 130°C. The weight of the samples before and after the test was weighed separately. The corrosion resistance was measured by the weight change per unit area (ΔM), where: ΔM = (weight before test - weight after test) / surface area of the sample.

The results of the above tests are shown in Table 3.

As can be seen from Table 3, by changing the amount of the lubricant added, the type of gas used in the dehydrogenation process, the rotational speed of the air classifier wheel of the jet mill, the nozzle pressure for jet-milling pulverization, the type of the gas used in cooling in the sintering process, and the type of the gas used in cooling in the heat treatment process, the N content and grain size of the prepared R-T-B based permanent magnets can be changed, thereby affecting the volume fraction of the R-N enriched area in the grain boundary phase, magnetic properties and corrosion resistance.

From the effect data of Examples 1, 2, 4, 5 and Comparative Examples 1, 2, 4, it can be seen that the volume fraction of the R-N enriched area in the four Examples is only no more than 2% of the grain boundary phase, while the volume fractions of the R-N enriched area in Comparative Examples 1, 2 and 4 are as high as 27%, 46% and 58% respectively. For the remanence Br, the remanence Br of Example 2 is as high as 13.83 kGs, while the highest remanence Br in the Comparative Examples is only 13.73 kGs. For the coercive force Hcj, the coercive forces of the four Examples all exceed 22kOe, while the coercive forces the Comparative Examples do not exceed 20.2kOe. For the thermal demagnetization at 120°C, the thermal demagnetization at 120°C of the four Examples do not exceed 0.4%, while the thermal demagnetization at 120°C of the Comparative Examples 1, 2 and 4 are as high as 4.5%, 4.8% and 4.3% respectively. For corrosion resistance, the weight changes per unit area of the four Examples do not exceed 0.57 mg/cm², while the weight changes per unit area of the Comparative Examples exceed 1.9 mg/cm².

The R-T-B based permanent magnets prepared by Example 3 and Comparative Example 3 after grain boundary diffusion also have the same increasing and decreasing trend as the magnet parameters of the R-T-B based permanent magnets without grain boundary diffusion. Specifically: the volume fraction of the R-N enriched region in Example 3 is only 1% of the grain boundary phase, while that in Comparative Example 3 is as high as 38%; for remanence Br and coercive force Hcj, Comparative Example 3 is reduced compared with Example 3; for thermal demagnetization at 150°C, Example 3 is 0.90%, while Comparative Example 3 is as high as 4.2%; and for the corrosion resistance, the weight change per unit area of Example 3 is 0.564 mg/cm², while the weight change per unit area of Comparative Example 3 is 1.815 mg/cm².

**Table 3 Comparison of the magnet parameters of Examples 1-5 and Comparative Examples 1-4**

| | N Content/ ppm | Value of Grain Size D /µm | Volume Fraction of R-N enriched area in Grain Boundary Phase | Magnetic Properties | | Thermal Demagnetization | | Corrosion Resistance-HAST Testing | | | |
|---|---|---|---|---|---|---|---|---|---|---|---|
| | | | | Br/kGs | Hcj/kOe | 120°C | 150°C | Surface Area of Sample/ cm² | Weight before test/mg | Weight after test/mg | ΔM/ (mg/cm²) |
| Example 1 | 685 | 3.5 | 1% | 13.61 | 23.1 | 0.20% | / | 47.01 | 66375.0 | 66349.0 | 0.553 |
| Example 2 | 812 | 3.2 | 2% | 13.83 | 22.6 | 0.40% | / | 47.01 | 66349.5 | 66323.9 | 0.545 |
| Example 3 | 557 | 4.1 | 1% | 14.14 | 28.5 | / | 0.90% | 47.01 | 66409.6 | 66383.1 | 0.564 |
| Example 4 | 956 | 3.3 | 2% | 13.52 | 23.2 | 0.20% | / | 47.01 | 66394.3 | 66369.0 | 0.538 |
| Example 5 | 1105 | 3 | 2% | 13.51 | 23.8 | 0.10% | / | 47.01 | 66335.5 | 66311.1 | 0.519 |
| Comparative Example 1 | 426 | 6.2 | 27% | 13.5 | 19.9 | 4.50% | / | 47.01 | 66418.1 | 66328.3 | 1.91 |
| Comparative Example 2 | 708 | 6 | 46% | 13.73 | 19.8 | 4.80% | / | 47.01 | 66356.6 | 66257.0 | 2.119 |
| Comparative Example 3 | 627 | 5 | 38% | 14.08 | 26.1 | / | 4.20% | 47.01 | 66365.3 | 66280.0 | 1.815 |
| Comparative Example 4 | 788 | 4.9 | 58% | 13.49 | 20.2 | 4.30% | / | 47.01 | 66400.4 | 66294.9 | 2.244 |

In the present invention, the N content and grain size of the R-T-B based permanent magnets are adjusted through the above-mentioned process conditions, thereby reducing the volume fraction of the R-N enriched area in the grain boundary phase, increasing the remanence Br and coercive force Hcj, and reducing the thermal demagnetization and the weight change per unit area under wet heat conditions, which has a positive effect on both magnetic properties and corrosion resistance.

## Claims

1. An R-T-B-based permanent magnet, **characterized in that**:
the R-T-B-based permanent magnet comprises a nitrogen content of X ppm which satisfies 500≤X≤1300,
the R-T-B-based permanent magnet has an average grain size of D µm which satisfies -2.6lnX+20≤D≤-2.3lnX+19.6;
the R-T-B-based permanent magnet comprises a main phase grain and a grain boundary phase; the main phase grain comprise R₂Fe₁₄B; the grain boundary phases is distributed between main phase grains; and the grain boundary phase comprises a R-N enriched area having a volume fraction of less than 10% in the grain boundary phase.

2. The R-T-B-based permanent magnet according to claim 1, **characterized in that**:
the X satisfies 550≤X≤1200, preferably 600≤X≤1000; and/or
the D satisfies 1.6≤D≤5.0, preferably 2.1≤D≤4.8; and/or
the R-N enriched area has a volume fraction of less than 5%, preferably less than 3%, for example 1% or 2% in the grain boundary phase.

3. The R-T-B-based permanent magnet according to claim 2, **characterized in that**:
the X is 557, the D is 4.1; or
the X is 685, the D is 3.5; or
the X is 812, the D is 3.2; or
the X is 956, the D is 3.3; or
the X is 1105, the D is 3.

4. A preparation method for the R-T-B-based permanent magnet according to any one of claims 1 to 3, **characterized by** comprising following steps of:
S1: smelting a raw material composition for the R-T-B-based permanent magnet to obtain a molten liquid;
S2: casting the molten liquid to obtain an alloy sheet;
S3: subjecting the alloy sheet to hydrogen decrepitation to obtain a coarse powder;
S4: subjecting the coarse powder to jet-milling pulverization to obtain a fine powder;
S5: shaping the fine powder to obtain a molded body;
S6: sintering the molded body to obtain a sintered body;
S7: heat-treating the sintered body to obtain the R-T-B-based permanent magnet.

5. The preparation method for the R-T-B-based permanent magnet according to claim 4, **characterized in that**:
in step S1, the smelting is performed in a high-frequency vacuum induction smelting furnace;
wherein the high-frequency vacuum induction smelting furnace preferably has a vacuum degree of 5×10⁻²Pa; the smelting is preferably performed at a temperature of 1500°C or less, for example, 1480°C; and the smelting is preferably performed in a crucible made of alumina; and/or
in step S2, the casting comprises a process of casting in a medium-frequency vacuum induction rapid solidification strip casting furnace in an Ar atmosphere, and rapidly cooling to obtain an alloy sheet; wherein the Ar atmosphere preferably has a pressure of 5.5×10⁴Pa; and the rapidly cooling is preferably performed at a cooling rate of 10²°C/sec - 10⁴°C/sec;
in step S5, the shaping is performed by a magnetic field orientation shaping method; preferably, the magnetic field orientation shaping method comprises steps of: subjecting the powder to primary shaping in an oriented magnetic field of 1.6 T at a shaping pressure of 0.35 ton/cm² by using a right-angle oriented magnetic field molding machine, and then demagnetizing it in a magnetic field of 0.2 T to obtain a primary shaped body; sealing the primary shaped body and then subjecting it to a secondary shaping at a pressure of 1.3 ton/cm² by using an isostatic pressing machine.

6. The preparation method for the R-T-B-based permanent magnet according to claim 4, **characterized in that**:
in step S3, the hydrogen decrepitation comprises hydrogen absorption, dehydrogenation and cooling, wherein the hydrogen absorption is preferably carried out at a hydrogen pressure of 0.05-0.25MPa, for example, 0.15MPa; the dehydrogenation is preferably carried out by vacuuming whiling heating; the cooling is preferably carried out in a nitrogen atmosphere or an argon atmosphere; preferably, when the cooling is carried out in a nitrogen atmosphere, the nitrogen atmosphere is achieved by introducing nitrogen, wherein nitrogen is introduced for preferably 1-5 times, and the introduced nitrogen has a pressure of preferably 0.08MPa; and/or
in step S4, the jet-milling pulverization is performed in a nitrogen atmosphere comprising an oxidizing gas with a content of 150 ppm or less, and the oxidizing gas is preferably oxygen and/or water; and/or
in step S4, the jet-milling pulverization is performed at a speed of 3500-6000 rpm; and/or
in step S4, the jet mill pulverization is carried out under a nozzle pressure of 0.35-0.45MPa, for example, 0.38MPa; and/or
in step S4, the fine powder obtained after the jet-milling pulverization has a particle size D50 of 2.5-5.0 µm; and/or
in step S4, the method further includes a step of uniformly mixing the fine powder with a lubricant after the jet-milling pulverization, or the method further includes a step of uniformly mixing the coarse powder with a lubricant before the jet-milling pulverization, wherein the lubricant is, for example, zinc stearate and benzotriazole; the lubricant is added at an amount of preferably *0.10-0.15%,* for example 0.12% by weight of the mixed powder; wherein the mixing is preferably carried out by a V-type mixer; and/or
in step S6, the sintering comprises preheating, sintering and cooling under a vacuum condition, wherein the vacuum condition is preferably 5×10⁻³Pa; the preheating is performed at a temperature of preferably 300-600°C; the preheating is performed for a time of preferably 1-2h; more preferably, the preheating comprises preheating at 300°C and 600°C for 1h respectively; the sintering is performed at a temperature of preferably 1040-1090°C; the cooling is preferably carried out in a nitrogen atmosphere or an argon atmosphere; preferably, when the cooling is carried out in a nitrogen atmosphere, the nitrogen atmosphere is achieved by introducing nitrogen, wherein nitrogen is introduced for preferably 1-5 times, and the introduced nitrogen has a pressure of preferably 0.05-0.1MPa, for example 0.1MPa; and/or
in step S7, the heat treating is performed at a temperature of 430-600°C, for example, 500°C; and/or
in step S7, the heat treating is performed under a vacuum of 9×10⁻³ Pa; and/or
in step S7, the heat treating further comprises a cooling step, and the cooling is preferably performed under a nitrogen atmosphere or an argon atmosphere.

7. The preparation method for the R-T-B-based permanent magnet according to claim 6, **characterized in that**:
at most one cooling step of the cooling in step S3, the cooling in step S6 and the cooling in step S7 is performed under a nitrogen atmosphere;
preferably, the cooling in step S3 is carried out under an argon atmosphere, the cooling in step S6 is carried out under an argon atmosphere, and the cooling in step S7 is carried out under an argon atmosphere; more preferably, the jet-milling pulverization in step S4 is performed at a speed of 4500-5500rpm, the jet mill pulverization in step S4 is carried out under a nozzle pressure of 0.35-0.45Mpa; and further preferably, in step S4, the lubricant is added at an amount of 0.25-0.35% by weight of the mixed powder;
preferably, the cooling in step S3 is carried out in a nitrogen atmosphere, the cooling in step S6 is carried out in an argon atmosphere, and the cooling in step S7 is carried out in an argon atmosphere; more preferably, the jet-milling pulverization in step S4 is performed at a speed of 5000-6000rpm, the jet mill pulverization in step S4 is carried out under a nozzle pressure of 0.35-0.45Mpa; and further preferably, in step S4, the lubricant is added at an amount of 0.10-0.20% by weight of the mixed powder;
preferably, the cooling in step S3 is carried out in an argon atmosphere, the cooling in step S6 is carried out in a nitrogen atmosphere, and the cooling in step S7 is carried out in an argon atmosphere; more preferably, the jet-milling pulverization in step S4 is performed at a speed of 5000-6000rpm, the jet mill pulverization in step S4 is carried out under a nozzle pressure of 0.35-0.45Mpa; and further preferably, in step S4, the lubricant is added at an amount of 0.10-0.20% by weight of the mixed powder;
preferably, the cooling in step S3 is carried out under an argon atmosphere, the cooling in step S6 is carried out under an argon atmosphere, and the cooling in step S7 is carried out under a nitrogen atmosphere; more preferably, the jet-milling pulverization in step S4 is performed at a speed of 5500-6000rpm, the jet mill pulverization in step S4 is carried out under a nozzle pressure of 0.35-0.45Mpa; and further preferably, in step S4, the lubricant is added at an amount of 0.10-0.20% by weight of the mixed powder.

8. The preparation method for the R-T-B-based permanent magnet according to claim 4, **characterized in that**:
the method further comprises a step of grain boundary diffusion after step S6 and before step S7;
preferably, the step of grain boundary diffusion comprises evaporating, coating or sputtering a diffusion source raw material on a surface of the sintered body and performing a heat treatment for diffusion;
wherein the diffusion source raw material is preferably a substance comprising a heavy rare earth element; the substance comprising a heavy rare earth element is preferably a heavy rare earth element metal, or a compound or alloy comprising a heavy rare earth element; and the heavy rare earth element preferably comprises Tb and/or Dy;
wherein the heat treatment for diffusion is performed at a temperature of preferably 800-950°C, such as 920°C;
wherein the heat treatment for diffusion is performed for a time of preferably 12-48h, such as 24h.

9. The preparation method for the R-T-B-based permanent magnet according to claim 4, **characterized in that**:
the raw material composition for the R-T-B-based permanent magnet comprises the following components of:
a light rare earth element RL, wherein the RL comprises Nd: 24-30wt%, Pr: 0wt%≤Pr≤8wt%;
a heavy rare earth element RH, wherein the RH comprises Dy and/or Tb: 0wt%≤RH≤0.9wt%;
Co: 0-1.5wt%;
Al: 0.03-0.3wt%;
X: 0-0.6wt%, wherein X is one or more of Zr and Ti;
Cu: 0.1-0.4wt%;
Ga: 0.1-0.4wt%;
B: 0.92-0.98wt%; and
a balance of Fe;
wherein wt% represents a mass percentage of a corresponding component in the R-T-B-based permanent magnet, and a sum of all components is 100wt%.

10. Use of the R-T-B-based permanent magnet according to any one of claims 1 to 3 as an electronic component in an electric motor.
